# EUROPEAN PATENT SPECIFICATION

(11) **EP 4 574 588 B1**
(45) Date of publication and mention of the grant of the patent: **23.09.2026**
(21) Application number: 24218962.9
(22) Date of filing: 11.12.2024
(51) Int. Cl.: B60T 1/10, B60L 7/18, B60L 7/26, B60L 15/20, B60T 13/58

(54) **METHOD FOR CONTROLLING BRAKING SYSTEM OF ELECTRIC VEHICLE AND BRAKING SYSTEM**
VERFAHREN ZUR STEUERUNG DES BREMSSYSTEMS EINES ELEKTROFAHRZEUGS UND BREMSSYSTEM
PROCÉDÉ DE COMMANDE DE SYSTÈME DE FREINAGE DE VÉHICULE ÉLECTRIQUE ET SYSTÈME DE FREINAGE

(30) Priority: 20.12.2023 CN 202311767469
(43) Date of publication of application: 25.06.2025
(73) Proprietor: Robert Bosch GmbH, 70442 Stuttgart (DE)
(72) Inventor: CHEN, Zonghe, Jiangsu, 214028 (CN)

(56) References cited:
- CN-B- 108 248 582
- KR-A- 20210 072 172

## Description

### Technical Field

The present invention relates to the field of vehicle braking, particularly to a method for controlling a braking system of an electric vehicle, a braking system for an electric vehicle, and a computer program product used to at least assist in implementing the steps of the method according to the present invention.

### Background Art

Most of the current vehicles only use a service brake for vehicle brakes, but high frequency and high intensity brakes may lead to wear and even brake failure of the service brake. In order to reduce or relieve the load of the service brake, a retarder may be installed in the vehicle. Moreover, for a vehicle with a motor installed, the motor may be operated in a generator mode to achieve brake energy recovery and improve its range. These brake modes can be simultaneously carried out into use by a continuous brake coordinator (EBC), but severe brake jitter can occur during the actual application. Therefore, the continuous brake coordinator needs to work with the Electronic Stabilization System (ESP) of the vehicle body to ensure vehicle body stability, which results in the existing continuous brake coordinator being put into use only in certain types of hybrid vehicles equipped with the Electronic Stabilization System and very high hardware and software costs.

Considering that pure electric vehicles can be equipped with these brake modes as well, how to develop a continuous brake coordinator for pure electric vehicles is a current technical problem that needs to be solved.

CN 108 248 582 B relates to an electronic braking method aiming at electric controlled brake system intelligence, networking, integrated control and brake sensitivity. KR 2021 0072172 A relates to a braking control method to improve a regenerative braking condition and an auxiliary braking condition.

### Summary of Invention

It is an aim of the present invention to provide a method for controlling a braking system of an electric vehicle, a braking system for an electric vehicle, and a computer program product to at least partially solve problems in the prior art.

The present invention is set out by the appended claims.

According to a first aspect of the present invention there is provided a method for controlling a braking system of an electric vehicle, as defined by independent claims 1 and 2, the method comprising:
- step S1: determining a total requested brake strength of the braking system based at least on a brake request of the braking system and
   a vehicle driving speed of the electric vehicle;
- step S2: determining a brake strength of each brake mode of the braking system based at least on vehicle status information of the electric vehicle, wherein the braking system has at least three brake modes, and the brake modes have a preset priority; and
- step S3: determining a requested brake force of each brake mode based at least on the total requested brake strength and the priority of the brake mode when at most two brake modes are put into use.
the brake mode of the braking system (1) includes a retarder brake mode, a service brake mode, and a motor brake mode.

According to the appended claim 1, the retarder brake mode is employed as a first brake mode having a first priority, and the motor brake mode is employed as a second brake mode having a second priority, and the service brake mode is employed as a third brake mode having a third priority.

According to the appended claim 2, the motor brake mode is employed as a first brake mode with a first priority, and the retarder brake mode is employed as a second brake mode with a second priority, and the service brake mode is employed as a third brake mode with a third priority.

The core idea of the present invention is as follows: only up to two brake modes are used in the braking process of an electric vehicle, thereby effectively suppressing brake jitter in the brake process, improving the driving comfort of the vehicle, and simplifying the control strategy for coordinating these brake modes, effectively reducing the hardware and software costs of a continuous brake coordinator for coordinating these brake modes.

According to a second aspect of the present invention, there is provided a braking system for an electric vehicle, wherein the system comprises the following members:
- a vehicle status acquisition module configured to acquire vehicle status information for an electric vehicle, the vehicle status information including a vehicle driving speed;
- a brake request acquisition module configured to acquire a brake request of the braking system;
- at least three brake modules respectively for executing a brake of a different brake mode, the brake mode having a preset priority; and
- a control module configured to perform the method according to the present invention.

According to a third aspect of the present invention, provided is a computer program product, such as a computer-readable program carrier comprising computer program instructions, wherein the computer program product at least assists in implementing the steps of the method according to the present invention when the computer program instructions are executed by a processor.

### Description of Accompanying Drawings

In the following, the present invention is described in greater detail with reference to the accompanying drawings to provide a better understanding of its principles, features, and advantages. The accompanying drawings include the following:
FIG. 1 shows a work flow chart of a method for controlling a braking system of an electric vehicle according to an exemplary example of the present invention;
FIG. 2 shows a structural block diagram of a braking system according to an exemplary example of the present invention;
FIG. 3 shows a work flow chart of a method for controlling a braking system of an electric vehicle according to another exemplary example of the present invention;
FIG. 4 shows a work flow chart of a method for controlling a braking system of an electric vehicle according to another exemplary example of the present invention; and
FIG. 5 shows a work flow chart of a method for controlling a braking system of an electric vehicle according to another exemplary example of the present invention.

### Specific Embodiments

To provide a clearer understanding of the technical problems, technical solutions, and beneficial technical effects to be addressed by the present invention, the following detailed description of the present invention will be provided with reference to the accompanying drawings and multiple exemplary examples. It should be understood that the specific examples described herein are provided solely for the purpose of explaining the present disclosure and not for limiting the scope of protection of the present disclosure. In addition, it should be understood that in this document, terms such as "first," "second," "third," etc., are used for descriptive purposes only and should not be construed as indicating or implying relative importance. Furthermore, such terms should not be understood as implying a specific quantity of the indicated technical features.

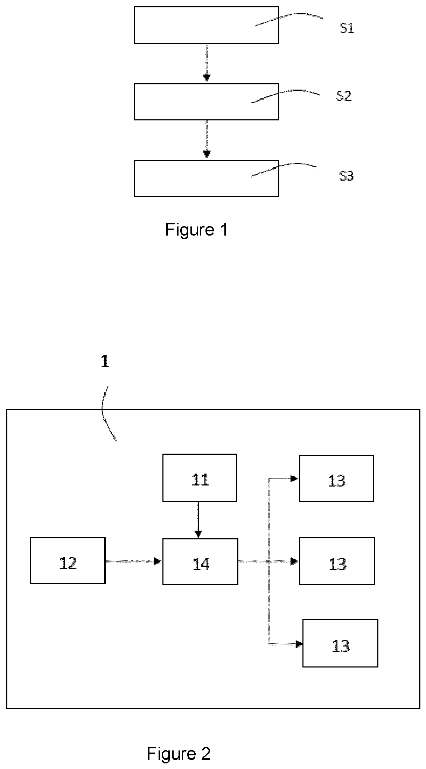

FIG. 1 shows a work flow chart of a method for controlling a braking system of an electric vehicle according to an exemplary example of the present invention. The following exemplary examples describe the method in accordance with the present invention in more detail.

The method may comprise steps S1 to S3. In step S1, the total requested brake strength of the brake system 1 may be determined based at least on the brake request of the braking system of the electric vehicle and the vehicle driving speed. In the meaning of the present invention, an electric vehicle refers to a pure electric vehicle with an in-vehicle power supply as the sole source of power, which is particularly distinct from hybrid vehicles that use internal combustion engines and electric motors as power sources, wherein the in-vehicle power supply may include one or more of a fuel cell, a lead acid cell, a nickel cell, and a lithium cell. A structural block diagram of one exemplary braking system 1 of a fuel cell vehicle shown in FIG. 2 is set forth in detail below.

As shown in FIG. 2, the braking system 1 includes a vehicle status acquisition module 11 configured to acquire various vehicle status information for an electric vehicle. The vehicle status acquisition module 11 may include an in-vehicle sensor mounted on an electric vehicle, such as a vehicle speed sensor measuring the driving speed of the vehicle, a wheel speed sensor measuring a wheel speed, i.e. wheel rotation speed, of the electric vehicle, and an in-vehicle temperature sensor measuring a motor temperature of the electric vehicle. The vehicle status acquisition module 11 may also include various in-vehicle control units of an electric vehicle, such as obtaining a battery charge status of the electric vehicle obtained by a battery management system, obtaining a retarder gear of the electric vehicle via a retarder control unit, etc.

Here, the braking system 1 further includes a brake request acquisition module 12 configured to obtain a brake request of the braking system 1. A driver's request for a brake of the braking system 1 may be determined, inter alia, based on the depth (which is acquired by measuring the amount of travel displacement of the brake pedal) and/or the speed (which is acquired by measuring the amount of travel displacement variation of the brake pedal) of the driver's stepping on the brake pedal. For example, if the driver steps on the brake pedal deeply and quickly, a stronger brake request from the dr to the braking system 1 is acquired.

The total requested brake strength of the braking system 1, i.e., the total requested brake strength required to achieve a desired brake of the driver at the current driving speed, may be determined in the control module 14 of the braking system 1 based at least on the brake request of the braking system 1 and the vehicle driving speed.

In step S2, the brake strength of each brake mode of the braking system is determined based at least on the vehicle status information of the electric vehicle, wherein the braking system 1 has at least three braking modes and the brake mode has a preset priority. In the present example of the present invention, the brake mode of the braking system 1 includes, for example, a retarder brake mode, a service brake mode, and a motor brake mode, etc. The three brake modules 13 are exemplarily shown in the structural block diagram of the braking system 1 of FIG. 2 for executing brakes in different brake modes, the priority sequence of which may be adjusted according to vehicle design needs, rather than immobilized, such as a first brake mode set to have a first priority, a second brake mode having a second priority, and a third brake mode having a third priority. It is to be noted that the listed brake mode is merely exemplary and should not be limited thereto.

Exemplarily, in the motor brake mode, a brake force can be generated by regenerative brake, which refers to that the excess energy released during vehicle deceleration or braking process is used to make the motor operate in the condition of a generator while ensuring the brake efficiency of the vehicle, thereby converting the excess energy into electrical energy and storing the same in an in-vehicle energy storage device (e.g., an in-vehicle battery). The higher the wheel speed of the vehicle during the regenerative brake phase, the greater the brake strength of the motor brake mode. However, when the battery charge state is above a certain threshold, the regenerative brake of the motor brake mode needs to be limited to prevent the regenerative current from causing the in-vehicle battery to be overcharged. Moreover, when the motor temperature is too high, the resistance value inside the motor increases, which in turn causes the brake strength of the motor brake mode to decrease. Accordingly, the brake strength of the motor brake mode of the braking system 1 may be determined based at least on the wheel speed, the battery charge state, and/or motor temperature of the electric vehicle. Moreover, the maximum brake force of the motor brake mode is also affected by the wheel speed, the battery charge state, and/or motor temperature of the electric vehicle.

For example, the brake strength of the retarder brake mode of the braking system 1 may be determined based at least on a retarder gear of the electric vehicle. Typically, the retarder gear can be divided into a constant speed gear and a brake gear that may not be in a different gear, wherein the higher the gear of the brake gear, the higher the brake strength of the brake gear. Depending on the working principle, the retarder can be classified as an eddy current retarder, a hydraulic retarder, and an aerodynamic retarder, etc. For example, in the case of a hydraulic retarder, converting vehicle kinetic energy into thermal energy and removing the converted thermal energy through circulating coolant, especially the use of a high-speed brake gear for extended periods of time, can cause the coolant temperature in the hydraulic retarder to increase, thereby affecting the maximum available brake force of the hydraulic retarder. For example, in the case of an eddy current retarder, the excitation current flowing within a stator coil produces a stator magnetic field, and the rotor rotates with the drive shaft and cuts the magnetic line of the stator magnetic field, thereby generating eddy current-like induced current inside the rotor. The stator magnetic field applies an electromagnetic force to the rotor that impedes rotor rotation, thereby generating a brake force, which can be adjusted by the excitation current flowing in the stator coil. Here, the greater the excitation current, the stronger the stator magnetic field and the greater the maximum available brake force of the eddy current retarder.

For example, in the service brake mode, the driving speed of the vehicle can be reduced by a hydraulic brake mechanism built on the basis of the Pascal's Law, and the brake strength thereof is influenced by factors such as coefficient of ground adhesion, wheel load, and wheel radius. Under the premise that the safety requirements of the entire vehicle brake are met, the maximum available brake force of the service brake mode is generally sufficient to satisfy the brake request of the driver in non-urgent situations. Therefore, the maximum available brake force of the service brake mode may be considered to be unrestricted in the meaning of the present invention.

In step S3, with up to two brake modes put into use, the requested brake force of each brake mode is determined based, at least, on the total requested brake strength and the priority of the brake mode, respectively. In the prior art, multiple brake modes, such as the motor brake mode, the retarder brake mode, the regenerative brake mode, and the service brake mode, are generally used simultaneously in the braking system of a hybrid vehicle, which can cause severe brake jitter during the braking process. Therefore, in these hybrid vehicles, the continuous brake coordinator needs to work with the vehicle body electronic stabilization system to ensure the vehicle body stability, which greatly increases the costs of software and hardware of vehicle system design. In an example of the present invention, only up to two brake modes are used in the braking process of an electric vehicle, i.e., only one brake mode or two brake modes are used. Here, the requested brake force of the brake mode put in use does not exceed its maximum available brake force, and thus it can simplify the control strategy used to coordinate these brake modes and effectively reduce the hardware and software costs of the continuous brake coordinator used to coordinate these brake modes.

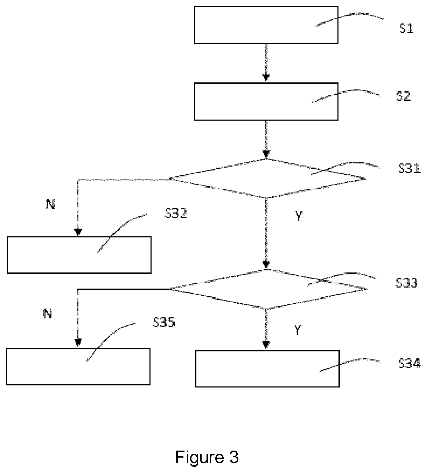

The step S3 will be described in detail below in connection with the work flow chart of a method for controlling a braking system of an electric vehicle according to another exemplary example of the present invention, shown in FIG. 3. As shown in FIG. 3, the step S3 may include steps S31 to S35. In step S31, it is judged whether a brake strength Z1 of a first brake mode is greater than zero. If the brake strength Z1 of the first brake mode is not greater than zero, in Step S32, when the first brake mode is not put into use, the requested brake force of the various brake modes may be determined based at least on the total requested brake strength Zt and the priority of the brake mode respectively, i.e., a requested brake force F2 of the second brake mode and, when necessary, a requested brake force F3 of the third brake mode may be determined here.

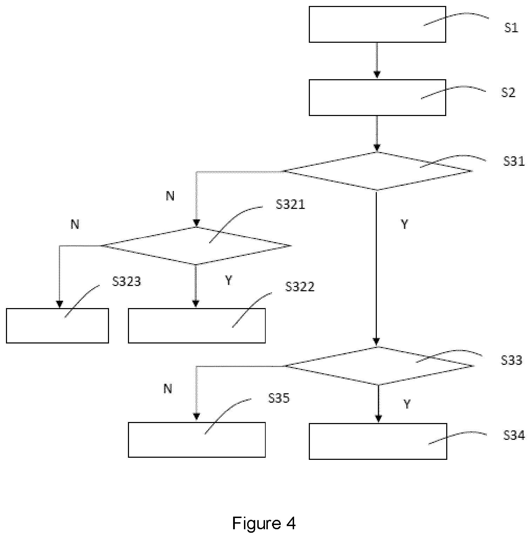

The step S32 will be further described below in connection with the work flow chart of a method for controlling a braking system of an electric vehicle according to another exemplary example of the present invention, shown in FIG. 4. Only the differences with the examples shown in FIG. 3 are set forth below, while the same steps are not repeated for brevity.

As shown in FIG. 4, the step S32 further includes steps S321S323. In step S321, it is judged whether the total requested brake strength Zt is greater than the brake strength Z2 of the second brake mode. If the total requested brake strength Zt is greater than the brake strength Z2 of the second brake mode, then in step S322, the request brake force F2 is determined as the maximum available brake force F2max of the second brake mode and the requested brake force F3 is determined as a difference between the total request brake force Ft calculated based on the total requested brake strength Zt and the requested brake force F3 of the third brake mode. If the total requested brake strength Zt is not greater than the brake strength Z2 of the second brake mode, then in step S323, the requested brake force F2of the second brake mode is determined as the total requested brake force Ft calculated based on the total requested brake strength Zt.

If the brake strength Z1 of the first brake mode is greater than zero, then in step S33, it is judged whether the total requested braking strength Zt is greater than the sum of the brake strength Z1 of the first brake mode and the brake strength Z2 of the second brake mode. If the total requested brake strength Zt is greater than the sum of the brake strength Z1 of the first brake mode and the brake strength Z2 of the second brake mode, in step S34, the requested brake force F1 of the first brake mode is determined as the maximum available brake force F1max of the first brake mode and the requested brake force F3 of the third brake mode is determined as the
difference between the total requested brake force Ft calculated based on the requested brake force Zt and the requested brake force F1 of the first brake mode. If the total request brake strength Zt is not greater than the sum of the brake strength Z1 of the first brake mode and the brake strength Z2 of the second brake mode, then in Step S35, when the first brake mode is not put into use, the requested brake force of each brake mode may be determined based at least on the total requested brake strength Zt and the priority of the brake mode respectively, i.e., the requested brake force F1 of the second brake mode and the requested brake force F3 of the third brake mode may be determined here.

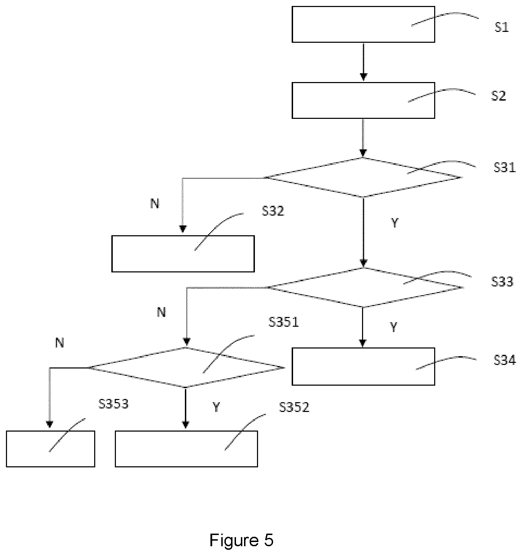

The step S35 will be further described in connection with the work flow chart of a method for controlling a braking system of an electric vehicle according to another exemplary example of the present invention, shown in FIG. 5. Only the differences with the examples shown in FIG. 3 are set forth below, while the same steps are not repeated for brevity.

As shown in FIG. 5, the step S35 further includes steps S351S353. In step S351, it is judged whether the total requested brake strength Zt is greater than the brake strength Z1 of the first brake mode. If the total requested brake strength Zt is greater than the brake strength Z1 of the first brake mode, in step S352, the requested brake force F1 of the first brake mode is determined as the maximum available brake force F1max of the first brake mode and the requested brake force F2 is determined as the difference between the total requested brake force Ft calculated based on the total requested brake strength Zt and the requested brake force F1 of the first brake mode. If the total requested brake strength Zt is not greater than the brake strength Z1 of the first brake mode, then in step S353, the requested brake force F1 of the first brake mode is determined as the total requested brake force Ft calculated based on the total requested brake strength Zt.

According to examples of the present invention, only up to two brake modes are used in the braking process of an electric vehicle, thereby effectively inhibiting brake jitter in the braking process, improving the drive comfort of the vehicle, and simplifying the control strategy used to coordinate these brake modes, effectively reducing the hardware and software costs of continuous brake coordinators used to coordinate these brake modes.

In an optional example of the present invention, the retarder brake mode may be adopted as the first brake mode with a first priority, and the motor brake mode may be adopted as the second brake mode with a second priority, and the service brake mode may be adopted as the third brake mode with a third priority. By using the motor brake mode and the service brake mode in a cooperative manner with the retarder brake mode while giving priority to the retarder brake mode, a smoother brake effect can be obtained and the brake strength and brake frequency of the service braking can be reduced as much as possible, thereby effectively extending the service life of the service brake and reducing the effects of thermal fading of the service brake due to high intensity and high frequency of service braking.

In another optional example of the present invention, the motor brake mode may be employed as a first brake mode with a first priority, and the retarder brake mode may be employed as a second brake mode with a second priority, and the service brake mode may be employed as a third brake mode with a third priority. By using the retarder brake mode and the service brake mode in a cooperative manner with the motor brake mode while giving priority to the motor brake mode, the excess energy during the braking process of the electric vehicle can be recovered as much as possible to improve the range of the electric vehicle while minimizing the brake strength and brake frequency of service braking, thereby effectively extending the service life of the service brake and reducing the effects of thermal fading of the service brake due to high intensity and high frequency of service braking.

In addition, it should be noted that the serial numbers of the steps described herein do not necessarily represent a sequential order, but are merely reference numerals. Depending on the circumstances, the order may be changed as long as it achieves the technical objects of the present invention.

## Claims

1. A method for controlling a braking system (1) of an electric vehicle, the method comprising:
step S1: determining a total requested brake strength of the braking system (1) based at least on a brake request of the braking system (1) and a vehicle driving speed of the electric vehicle;
step S2: determining a brake strength of each brake mode of the braking system (1) based at least on vehicle status information of the electric vehicle, wherein the braking system (1) has at least three brake modes, and the brake modes have a preset priority; and
step S3: determining a requested brake force of each brake mode based at least on the total requested brake strength and the priority of the brake mode when at most two brake modes are put into use,
wherein the brake mode of the braking system (1) includes a retarder brake mode, a service brake mode, and a motor brake mode, and
wherein the retarder brake mode is employed as a first brake mode having a first priority, and the motor brake mode is employed as a second brake mode having a second priority, and the service brake mode is employed as a third brake mode having a third priority.

2. A method for controlling a braking system (1) of an electric vehicle, the method comprising:
step S1: determining a total requested brake strength of the braking system (1) based at least on a brake request of the braking system (1) and a vehicle driving speed of the electric vehicle;
step S2: determining a brake strength of each brake mode of the braking system (1) based at least on vehicle status information of the electric vehicle, wherein the braking system (1) has at least three brake modes, and the brake modes have a preset priority; and
step S3: determining a requested brake force of each brake mode based at least on the total requested brake strength and the priority of the brake mode when at most two brake modes are put into use,
wherein the brake mode of the braking system (1) includes a retarder brake mode, a service brake mode, and a motor brake mode, and
wherein the motor brake mode is employed as a first brake mode with a first priority, and the retarder brake mode is employed as a second brake mode with a second priority, and the service brake mode is employed as a third brake mode with a third priority.

3. The method according to Claim 1 or 2, wherein the requested brake force for each brake mode is determined separately such that the requested brake force of each brake mode does not exceed its maximum available brake force.

4. The method according to any one of Claims 1 to 3, wherein the brake strength of the motor brake mode of the braking system (1) is determined based at least on a wheel speed, a battery charge state, and/or a motor temperature of the electric vehicle.

5. The method according to any one of Claims 1 to 3, wherein the brake strength of the retarder brake mode of the braking system (1) is determined based at least on a retarder gear of the electric vehicle.

6. The method according to any one of Claims 1 to 3, wherein step S3 further comprises:
step S31: judging whether the brake strength of the first brake mode is greater than zero;
step S32: if the brake strength of the first brake mode is not greater than zero, then determining the requested brake force of each brake mode based at least on the total requested brake strength and the priority of the brake mode respectively when the first brake mode is not put into use;
step S33: if the brake strength of the first brake mode is greater than zero, determining whether the total requested brake strength is greater than a sum of the brake strength of the first brake mode and the brake strength of the second brake mode;
step S34: if the total requested brake strength is greater than the sum of the brake strength of the first brake mode and the brake strength of the second brake mode, determining the requested brake force of the first brake mode as the maximum available brake force of the first brake mode and determining the requested brake force of the third brake mode as a difference between the total requested brake force calculated based on the total requested brake strength and the requested brake force of the first brake mode; and
step S35: if the total requested brake strength is not greater than the sum of the brake strength of the first brake mode and the brake strength of the second brake mode, then determining the requested brake force of each brake mode based at least on the total requested brake strength and the priority of the brake mode respectively when the first brake mode is not put into use.

7. The method according to Claim 6, wherein the step S32 further comprises:
step S321: judging whether the total requested brake strength is greater than the brake strength of the second brake mode;
step S322: if the total requested brake strength is greater than the brake strength of the second brake mode, determining the requested brake force of the second brake mode as the maximum available brake force of the second brake mode and determining the requested brake force of the third brake mode as a difference between the total requested brake force calculated based on the total requested brake strength and the requested brake force of the third brake mode;
and
step S323: determining the requested brake force of the second brake mode as a total requested brake force calculated based on the total requested brake strength if the total requested brake strength is not greater than the brake strength of the second brake mode.

8. The method according to Claim 6, wherein the step S35 further comprises:
step S351: judging whether the total requested brake strength is greater than the brake strength of the first brake mode;
step S352: if the total requested brake strength is greater than the brake strength of the first brake mode, determining the requested brake force of the first brake mode as the maximum available brake force of the first brake mode and determining the requested brake force of the second brake mode as a difference between the total requested brake force calculated based on the total requested brake strength and the requested brake force of the first brake mode; and
step S353: determining the requested brake force of the first brake mode as a total requested brake force calculated based on the total requested brake strength if the total requested brake strength is not greater than the brake strength of the first brake mode.

9. A braking system(1) for an electric vehicle, wherein the system (1) comprises the following members:
a vehicle status acquisition module (11) configured to acquire vehicle status information for an electric vehicle, the vehicle status information including a vehicle driving speed;
a brake request acquisition module (12) configured to acquire a brake request of the braking system (1);
at least three brake modules (13) respectively for executing a brake of a different brake mode, the brake mode having a preset priority; and
a control module (14) configured to perform the method according to any one of the preceding claims.

10. A computer program product, such as a computer-readable program carrier comprising computer program instructions, at least assisting in implementing the steps of the method according to any one of Claims 1 to 8 when the computer program instructions are executed by a processor.

## Patentansprüche

1. Verfahren zum Steuern eines Bremssystems (1) eines Elektrofahrzeugs, wobei das Verfahren Folgendes umfasst:
Schritt S1: Bestimmen einer angeforderten Gesamtbremsstärke des Bremssystems (1) basierend zumindest auf einer Bremsanforderung des Bremssystems (1) und einer Fahrzeugfahrgeschwindigkeit des Elektrofahrzeugs;
Schritt S2: Bestimmen einer Bremsstärke jedes Bremsmodus des Bremssystems (1) basierend zumindest auf Fahrzeugstatusinformationen des Elektrofahrzeugs, wobei das Bremssystem (1) zumindest drei Bremsmodi aufweist und die Bremsmodi eine voreingestellte Priorität aufweisen; und
Schritt S3: Bestimmen einer angeforderten Bremskraft jedes Bremsmodus basierend zumindest auf der angeforderten Gesamtbremsstärke und der Priorität des Bremsmodus, wenn höchstens zwei Bremsmodi verwendet werden,
wobei der Bremsmodus des Bremssystems (1) einen Retarderbremsmodus, einen Betriebsbremsmodus und einen Motorbremsmodus beinhaltet, und
wobei der Retarderbremsmodus als ein erster Bremsmodus mit einer ersten Priorität eingesetzt wird und der Motorbremsmodus als ein zweiter Bremsmodus mit einer zweiten Priorität eingesetzt wird und der Betriebsbremsmodus als ein dritter Bremsmodus mit einer dritten Priorität eingesetzt wird.

2. Verfahren zum Steuern eines Bremssystems (1) eines Elektrofahrzeugs, wobei das Verfahren Folgendes umfasst:
Schritt S1: Bestimmen einer angeforderten Gesamtbremsstärke des Bremssystems (1) basierend zumindest auf einer Bremsanforderung des Bremssystems (1) und einer Fahrzeugfahrgeschwindigkeit des Elektrofahrzeugs;
Schritt S2: Bestimmen einer Bremsstärke jedes Bremsmodus des Bremssystems (1) basierend zumindest auf Fahrzeugstatusinformationen des Elektrofahrzeugs, wobei das Bremssystem (1) zumindest drei Bremsmodi aufweist und die Bremsmodi eine voreingestellte Priorität aufweisen; und
Schritt S3: Bestimmen einer angeforderten Bremskraft jedes Bremsmodus basierend zumindest auf der angeforderten Gesamtbremsstärke und der Priorität des Bremsmodus, wenn höchstens zwei Bremsmodi verwendet werden,
wobei der Bremsmodus des Bremssystems (1) einen Retarderbremsmodus, einen Betriebsbremsmodus und einen Motorbremsmodus beinhaltet, und
wobei der Motorbremsmodus als ein erster Bremsmodus mit einer ersten Priorität eingesetzt wird und der Retarderbremsmodus als ein zweiter Bremsmodus mit einer zweiten Priorität eingesetzt wird und der Betriebsbremsmodus als ein dritter Bremsmodus mit einer dritten Priorität eingesetzt wird.

3. Verfahren nach Anspruch 1 oder 2, wobei die angeforderte Bremskraft für jeden Bremsmodus separat bestimmt wird, so dass die angeforderte Bremskraft jedes Bremsmodus seine maximal verfügbare Bremskraft nicht überschreitet.

4. Verfahren nach einem der Ansprüche 1 bis 3, wobei die Bremsstärke des Motorbremsmodus des Bremssystems (1) basierend zumindest auf einer Raddrehzahl, einem Batterieladezustand und/oder einer Motortemperatur des Elektrofahrzeugs bestimmt wird.

5. Verfahren nach einem der Ansprüche 1 bis 3, wobei die Bremsstärke des Retarderbremsmodus des Bremssystems (1) basierend zumindest auf einem Retardergetriebe des Elektrofahrzeugs bestimmt wird.

6. Verfahren nach einem der Ansprüche 1 bis 3, wobei Schritt S3 ferner Folgendes umfasst:
Schritt S31: Beurteilen, ob die Bremsstärke des ersten Bremsmodus größer als Null ist;
Schritt S32: falls die Bremsstärke des ersten Bremsmodus nicht größer als Null ist, dann Bestimmen der angeforderten Bremskraft jedes Bremsmodus basierend zumindest auf der angeforderten Gesamtbremsstärke bzw. der Priorität des Bremsmodus, wenn der erste Bremsmodus nicht verwendet wird;
Schritt S33: falls die Bremsstärke des ersten Bremsmodus größer als Null ist, Bestimmen, ob die angeforderte Gesamtbremsstärke größer als eine Summe aus der Bremsstärke des ersten Bremsmodus und der Bremsstärke des zweiten Bremsmodus ist;
Schritt S34: falls die angeforderte Gesamtbremsstärke größer als die Summe aus der Bremsstärke des ersten Bremsmodus und der Bremsstärke des zweiten Bremsmodus ist, Bestimmen der angeforderten Bremskraft des ersten Bremsmodus als die maximal verfügbare Bremskraft des ersten Bremsmodus und Bestimmen der angeforderten Bremskraft des dritten Bremsmodus als eine Differenz zwischen der angeforderten Gesamtbremskraft, die basierend auf der angeforderten Gesamtbremsstärke berechnet wird, und der angeforderten Bremskraft des ersten Bremsmodus; und
Schritt S35: falls die angeforderte Gesamtbremsstärke nicht größer als die Summe aus der Bremsstärke des ersten Bremsmodus und der Bremsstärke des zweiten Bremsmodus ist, dann Bestimmen der angeforderten Bremskraft jedes Bremsmodus basierend zumindest auf der angeforderten Gesamtbremsstärke bzw. der Priorität des Bremsmodus, wenn der erste Bremsmodus nicht verwendet wird.

7. Verfahren nach Anspruch 6, wobei der Schritt S32 ferner Folgendes umfasst:
Schritt S321: Beurteilen, ob die angeforderte Gesamtbremsstärke größer als die Bremsstärke des zweiten Bremsmodus ist;
Schritt S322: falls die angeforderte Gesamtbremsstärke größer als die Bremsstärke des zweiten Bremsmodus ist, Bestimmen der angeforderten Bremskraft des zweiten Bremsmodus als die maximal verfügbare Bremskraft des zweiten Bremsmodus und Bestimmen der angeforderten Bremskraft des dritten Bremsmodus als eine Differenz zwischen der angeforderten Gesamtbremskraft, die basierend auf der angeforderten Gesamtbremsstärke berechnet wird, und der angeforderten Bremskraft des dritten Bremsmodus;
und
Schritt S323: Bestimmen der angeforderten Bremskraft des zweiten Bremsmodus als eine angeforderte Gesamtbremskraft, die basierend auf der angeforderten Gesamtbremsstärke berechnet wird, falls die angeforderte Gesamtbremsstärke nicht größer als die Bremsstärke des zweiten Bremsmodus ist.

8. Verfahren nach Anspruch 6, wobei der Schritt S35 ferner Folgendes umfasst:
Schritt S351: Beurteilen, ob die angeforderte Gesamtbremsstärke größer als die Bremsstärke des ersten Bremsmodus ist;
Schritt S352: falls die angeforderte Gesamtbremsstärke größer als die Bremsstärke des ersten Bremsmodus ist, Bestimmen der angeforderten Bremskraft des ersten Bremsmodus als die maximal verfügbare Bremskraft des ersten Bremsmodus und Bestimmen der angeforderten Bremskraft des zweiten Bremsmodus als eine Differenz zwischen der angeforderten Gesamtbremskraft, die basierend auf der angeforderten Gesamtbremsstärke berechnet wird, und der angeforderten Bremskraft des ersten Bremsmodus; und
Schritt S353: Bestimmen der angeforderten Bremskraft des ersten Bremsmodus als eine angeforderte Gesamtbremskraft, die basierend auf der angeforderten Gesamtbremsstärke berechnet wird, falls die angeforderte Gesamtbremsstärke nicht größer als die Bremsstärke des ersten Bremsmodus ist.

9. Bremssystem (1) für ein Elektrofahrzeug, wobei das System (1) die folgenden Elemente umfasst:
ein Fahrzeugstatuserfassungsmodul (11), das dazu ausgelegt ist, Fahrzeugstatusinformationen für ein Elektrofahrzeug zu erfassen, wobei die Fahrzeugstatusinformationen eine Fahrzeugfahrgeschwindigkeit beinhalten;
ein Bremsanforderungserfassungsmodul (12), das dazu ausgelegt ist, eine Bremsanforderung des Bremssystems (1) zu erfassen;
mindestens drei Bremsmodule (13) jeweils zum Ausführen einer Bremsung eines anderen Bremsmodus, wobei der Bremsmodus eine voreingestellte Priorität aufweist; und
ein Steuermodul (14), das dazu ausgelegt ist, das Verfahren nach einem der vorhergehenden Ansprüche durchzuführen.

10. Computerprogrammprodukt, wie etwa ein computerlesbarer Programmträger, der Computerprogrammanweisungen umfasst, die ein Implementieren der Schritte des Verfahrens nach einem der Ansprüche 1 bis 8 zumindest unterstützen, wenn die Computerprogrammanweisungen durch einen Prozessor ausgeführt werden.

## Revendications

1. Procédé de commande d'un système de freinage (1) d'un véhicule électrique, le procédé comprenant :
étape S1 : la détermination d'une force de freinage demandée totale du système de freinage (1) sur la base au moins d'une demande de freinage du système de freinage (1) et d'une vitesse de conduite de véhicule du véhicule électrique ;
étape S2 : la détermination d'une force de freinage de chaque mode de freinage du système de freinage (1) sur la base au moins d'informations de statut de véhicule du véhicule du véhicule électrique, dans lequel le système de freinage (1) a au moins trois modes de freinage, et les modes de freinage ont une priorité prédéfinie ; et
étape S3 : la détermination d'une force de freinage demandée de chaque mode de freinage sur la base au moins de la force de freinage demandée totale et de la priorité du mode de freinage lorsqu'au plus deux modes de freinage sont utilisés,
dans lequel le mode de freinage du système de freinage (1) inclut un mode frein à ralentisseur, un mode frein de service, et un mode frein moteur, et
dans lequel le mode frein à ralentisseur est employé en tant qu'un premier mode de freinage ayant une première priorité, et le mode frein moteur est employé en tant qu'un deuxième mode de freinage ayant une deuxième priorité, et le mode de freinage de service est employé en tant qu'un troisième mode de freinage ayant une troisième priorité.

2. Procédé de commande d'un système de freinage (1) d'un véhicule électrique, le procédé comprenant :
étape S1 : la détermination d'une force de freinage demandée totale du système de freinage (1) sur la base au moins d'une demande de freinage du système de freinage (1) et d'une vitesse de conduite de véhicule du véhicule électrique ;
étape S2 : la détermination d'une force de freinage de chaque mode de freinage du système de freinage (1) sur la base au moins d'informations de statut de véhicule du véhicule du véhicule électrique, dans lequel le système de freinage (1) a au moins trois modes de freinage, et les modes de freinage ont une priorité prédéfinie ; et
étape S3 : la détermination d'une force de freinage demandée de chaque mode de freinage sur la base au moins de la force de freinage demandée totale et de la priorité du mode de freinage lorsqu'au plus deux modes de freinage sont utilisés,
dans lequel le mode de freinage du système de freinage (1) inclut un mode frein à ralentisseur, un mode frein de service, et un mode frein moteur, et
dans lequel le mode frein moteur est employé en tant qu'un premier mode de freinage avec une première priorité, et le mode frein à ralentisseur est employé en tant qu'un deuxième mode frein avec une deuxième priorité, et le mode frein de service est employé en tant qu'un troisième mode frein avec une troisième priorité.

3. Procédé selon la revendication 1 ou la revendication 2, dans lequel la force de freinage demandée pour chaque mode de freinage est déterminée séparément de telle sorte que la force de freinage demandée de chaque mode de freinage ne dépasse pas sa force de freinage disponible maximale.

4. Procédé selon l'une quelconque des revendications 1 à 3, dans lequel la force de freinage du mode frein moteur du système de freinage (1) est déterminée sur la base au moins d'une vitesse de roue, d'un état de charge de batterie, et/ou d'une température de moteur du véhicule électrique.

5. Procédé selon l'une quelconque des revendications 1 à 3, dans lequel la force de freinage du mode frein à ralentisseur du système de freinage (1) est déterminée sur la base au moins d'un engrenage de ralentisseur du véhicule électrique.

6. Procédé selon l'une quelconque des revendications 1 à 3, dans lequel l'étape S3 comprend en outre :
étape S31 : le fait de juger si la force de freinage du premier mode de freinage est supérieure à zéro ;
étape S32 : si la force de freinage du premier mode de freinage n'est pas supérieure à zéro, ensuite la détermination de la force de freinage demandée de chaque mode de freinage sur la base au moins de la force de freinage demandée totale et de la priorité du mode de freinage respectivement lorsque le premier mode de freinage n'est pas utilisé ;
étape S33 : si la force de freinage du premier mode de freinage est supérieure à zéro, le fait de déterminer si la force de freinage demandée totale est supérieure à une somme de la force de freinage du premier mode de freinage et de la force de freinage du deuxième mode de freinage ;
étape S34 : si la force de freinage demandée totale est supérieure à la somme de la force de freinage du premier mode de freinage et de la force de freinage du deuxième mode de freinage, la détermination de la force de freinage demandée du premier mode de freinage en tant que la force de freinage disponible maximale du premier mode de freinage et la détermination de la force de freinage demandée du troisième mode de freinage en tant qu'une différence entre la force de freinage demandée totale calculée sur la base de la force de freinage demandée totale et de la force de freinage demandée du premier mode de freinage ; et
étape S35 : si la force de freinage demandée totale n'est pas supérieure à la somme de la force de freinage du premier mode de freinage et de la force de freinage du deuxième mode de freinage, ensuite la détermination de la force de freinage demandée de chaque mode de freinage sur la base au moins de la force de freinage demandée totale et de la priorité du mode de freinage respectivement lorsque le premier mode de freinage n'est pas utilisé.

7. Procédé selon la revendication 6, dans lequel l'étape S32 comprend en outre :
étape S321 : le fait de juger si la force de freinage demandée totale est supérieure à la force de freinage du deuxième mode de freinage ;
étape S322 : si la force de freinage demandée totale est supérieure à la force de freinage du deuxième mode de freinage, la détermination de la force de freinage demandée du deuxième mode de freinage en tant que la force de freinage disponible maximale du deuxième mode de freinage et la détermination de la force de freinage demandée du troisième mode de freinage en tant qu'une différence entre la force de freinage demandée totale calculée sur la base de la force de freinage demandée totale et de la force de freinage demandée du troisième mode de freinage ;
et
étape S323 : la détermination de la force de freinage demandée du deuxième mode de freinage en tant qu'une force de freinage demandée totale calculée sur la base de la force de freinage demandée totale si la force de freinage demandée totale n'est pas supérieure à la force de freinage du deuxième mode de freinage.

8. Procédé selon la revendication 6, dans lequel l'étape S35 comprend en outre :
étape S351 : le fait de juger si la force de freinage demandée totale est supérieure à la force de freinage du premier mode de freinage ;
étape S352 : si la force de freinage demandée totale est supérieure à la force de freinage du premier mode de freinage, la détermination de la force de freinage demandée du premier mode de freinage en tant que la force de freinage disponible maximale du premier mode de freinage et la détermination de la force de freinage demandée du deuxième mode de freinage en tant qu'une différence entre la force de freinage demandée totale calculée sur la base de la force de freinage demandée totale et de la force de freinage demandée du premier mode de freinage ; et
étape S353 : la détermination de la force de freinage demandée du premier mode de freinage en tant qu'une force de freinage demandée totale calculée sur la base de la force de freinage demandée totale si la force de freinage demandée totale n'est pas supérieure à la force de freinage du premier mode de freinage.

9. Système (1) de freinage pour un véhicule électrique, le système (1) comprenant les éléments suivants :
un module d'acquisition de statut de véhicule (11) configuré pour acquérir des informations de statut de véhicule pour un véhicule électrique, les informations de statut de véhicule incluant une vitesse de conduite de véhicule ;
un module d'acquisition de demande de freinage (12) configuré pour acquérir une demande de freinage du système de freinage (1) ;
au moins trois modules de freinage (13) respectivement pour exécuter un freinage d'un mode de freinage différent, le mode de freinage ayant une priorité prédéfinie ; et
un module de commande (14) configuré pour réaliser le procédé selon l'une quelconque des revendications précédentes.

10. Produit de programme d'ordinateur, tel qu'un support de programme lisible par ordinateur comprenant des instructions de programme d'ordinateur, aidant au moins à la mise en œuvre des étapes du procédé selon l'une quelconque des revendications 1 à 8 lorsque les instructions de programme d'ordinateur sont exécutées par un processeur.
